# EUROPEAN PATENT APPLICATION

(11) **EP 4 803 328 A1**
(43) Date of publication of application: **09.09.2026**
(21) Application number: 24884797.2
(22) Date of filing: 30.10.2024
(51) Int. Cl.: B60C 7/24, B60K 7/00

(54) **DETACHABLE TIRE FOR HUB MOTOR, HUB MOTOR, AND WHEELED MOBILE ROBOT**

(30) Priority: 31.10.2023 CN 202322939494 U
(71) Applicant: Hangzhou Hikrobot Co., Ltd., Hangzhou, Zhejiang 310051 (CN)
(72) Inventor: ZHAO, Jiaxuan, Hangzhou, Zhejiang 310051 (CN); CHEN, Wen, Hangzhou, Zhejiang 310051 (CN)
(74) Representative: Schmitz, Joseph
(86) International application number: PCT/CN2024/128419
(87) International publication number: WO 2025/092795

(57) **Abstract**

A detachable tire for a hub motor, a hub motor, and a wheeled mobile robot. The detachable tire comprises a hub and a tread; the hub comprises a side baffle plate adapted to be detachably connected to a motor body of a hub motor, and a tread mounting cylinder provided on one side of the side baffle plate; and the tread is circumferentially sleeved outside the tread mounting cylinder. Further disclosed are a hub motor provided with the detachable tire, and a wheeled mobile robot provided with the hub motor. By using the present application, during detachment/installation of a tire, because the hub is provided and the tread is assembled on the hub, rapid detachment/installation fro m/to the hub motor can be implemented by using the hub, so that the detachment/installation process is simpler and more convenient, and damage to a motor rotor is avoided.

## Description

The present application claims the priority to a Chinese patent application No. 202322939494.7 filed with the China National Intellectual Property Administration on October 31, 2023 and entitled "Detachable Tire for Hub Motor, Hub Motor, and Wheeled Mobile Robot", which is incorporated herein by reference in its entirety.

### Technical Field

The present application relates to the field of robotics, specifically to a detachable tire for a hub motor, a hub motor, and a wheeled mobile robot.

### Background

A hub motor is a motor designed to integrate "power system, transmission system and braking system" of a vehicle. This integration design makes it more space-efficient compared to traditional motors. The hub motor is widely used in increasingly diverse applications, such as in an automobile, a transport robot, and a cleaning equipment.

The hub motor includes a tire disposed exterior to the hub motor. When tire replacement is desired due to wear, the disassembly and assembly process is operationally complex and prone to damage the hub structure because of structural design reasons in the related art. Currently, a conventional scheme in the related art for achieving detachable replacement of the tire relative to the motor is as follows: a "mortise and tenon" structure is employed for the cooperation between the tread and the motor rotor, and a protective cover fixedly connected to the motor rotor is used to axially secure the tread. In this scheme, the outer wall of the motor rotor needs to be specially designed as a protruding structure, while a groove is formed at the corresponding position on the inner wall of the tread. Before the tread is mounted onto the motor rotor, visual alignment of the positions is required, otherwise, "interference" will occur. Therefore, the installation operation under this "mortise and tenon" structure scheme is relatively complex, and the manufacturing cost of such a structure is high. Furthermore, when this "mortise and tenon" structure scheme is applied, disassembling the tire requires first removing the protective cover of the motor rotor before the tread is taken off, which is complex to operate and prone to damage the protective cover structure.

### Summary

The present application aims, to some extent, to solve at least one of the technical problems mentioned above. For this purpose, the present application provides a detachable tire for a hub motor, a hub motor, and a wheeled mobile robot.

In a first aspect, an embodiment of the present application provides a detachable tire for a hub motor. The detachable tire includes: a wheel core and a tread. The wheel core includes a side baffle plate for detachably connecting to a motor body of the hub motor, and a tread mounting cylinder disposed on one side of the side baffle plate. The tread is circumferentially sleeved outside the tread mounting cylinder.

The application of the present invention provides the following beneficial effect: by providing the wheel core and assembling the tread onto the wheel core, rapid disassembly and assembly with the hub motor can be implemented by using the wheel core when tire disassembly and assembly is desired, so that the disassembly and assembly process is simpler and more convenient, and damage to the motor rotor is avoided.

Optionally, an annular rim is circumferentially disposed on the tread mounting cylinder on one side of the tread mounting cylinder close to the side baffle plate, a surface of one side of the tread facing the annular rim abuts against the annular rim.

In a second aspect, the present application further provides a hub motor including a motor body, wherein the hub motor further includes the detachable tire for the hub motor according to any one of the above technical solutions. The motor body is disposed in an inner chamber of the wheel core, and the motor body is detachably connected to the side baffle plate. The principle of the beneficial effect provided by hub motor of the present application is similar to that of the aforementioned detachable tire and will not be repeated here.

Optionally, the motor body includes a motor rotor as well as a first end cover and a second end cover disposed at both ends of the motor rotor. The side baffle plate is detachably connected to the first end cover. The tread mounting cylinder is circumferentially disposed outside the motor rotor.

Optionally, one of the side baffle plate and the first end cover is provided with a positioning protrusion, and the other is provided with a positioning hole adapted to the positioning protrusion. The positioning protrusion protrudes into the positioning hole.

Optionally, the side baffle plate is provided with a threaded jacking hole into which a bolt is to be screwed. As the bolt is screwed into the threaded jacking hole, the end of the bolt will apply pressure on the surface of one side of the first end cover facing the side baffle plate. Thus, by simply screwing the bolt, the pressure can be applied to separate the side baffle plate from the first end cover, making the disassembly operation very convenient.

Optionally, the second end cover has an annular flange protruding radially from the motor rotor. An end face of the tread mounting cylinder facing the annular flange abuts against the annular flange.

Optionally, at least one of the end face of the tread mounting cylinder and an end face of the first end cover is provided with a guide inclined surface.

Optionally, the side baffle plate is detachably connected to the first end cover via a bolt.

In a third aspect, the present application further provides a wheeled mobile robot including a body. The wheeled mobile robot further includes the hub motor according to any one of the above technical solutions. The hub motor is disposed on the body. The principle of the beneficial effect provided by the wheeled mobile robot of the present application is similar to that of the aforementioned detachable tire and will not be repeated here.

These features and advantages of the present application will be detailed in the following specific embodiments and accompanying drawings. The optimal embodiment or means of the present application will be thoroughly presented in conjunction with the accompanying drawings, but it is not a limitation on the technical solution of the present application. In addition, these features, elements, and components presented below and in the accompanying drawings are multiple, and are marked with different symbols or numbers for the sake of illustration, but all represent parts with same or similar structure or function.

### Brief Description of the Drawings

The accompanying drawings described herein are used to provide a further understanding of the present application and constitute a part of the present application. The schematic embodiments of the present application and their descriptions are used to explain the present application and do not constitute an improper limitation to the present application.
FIG. 1 is a schematic structural diagram of a detachable tire for a hub motor according to an embodiment of the present application;
FIG. 2 is a schematic structural diagram of the hub motor employing the detachable tire according to the embodiment of the present application;
FIG. 3 is an exploded view of the hub motor in FIG. 2;
FIG. 4 is a cross-sectional view of the hub motor in FIG. 2;
FIG. 5 is an enlarged schematic diagram of portion A in FIG. 4.

1. wheel core, 10. side baffle plate, 100. positioning hole, 101. mounting hole, 102. threaded jacking hole, 11. tread mounting cylinder, 110. annular rim, 2. tread, 3. motor rotor, 4. first end cover, 40. positioning protrusion, 41. guide inclined surface, 5. second end cover, 50. annular flange, 6. bolt, 7. fixed shaft.

### Detailed Description

The embodiments of the present application are described in detail below. Examples of the embodiments are illustrated in the accompanying drawings, wherein the same or similar reference signs throughout refer to the same or similar elements or elements having the same or similar functions. The embodiments based on the implementations are intended to explain the present application and cannot be understood as a limitation on the present application.

The terms "one embodiment" or "an instance" or "an example" cited in the present specification mean that a specific feature, structure, or characteristic described in connection with the embodiment may be included in at least one embodiment of the present application. The term "in one embodiment" appearing in various places in the specification does not necessarily refer to the same embodiment.

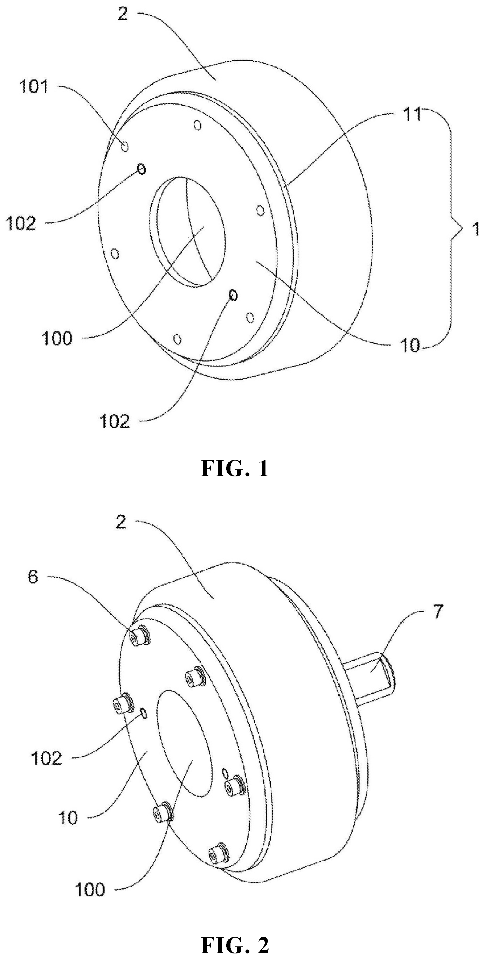

The embodiment provides a detachable tire for a hub motor. As shown in FIG. 1, the detachable tire includes a wheel core 1 and a tread 2. The wheel core 1 includes a side baffle plate 10 for detachably connecting to a motor body of the hub motor, and a tread mounting cylinder 11 disposed on one side of the side baffle plate 10. The tread 2 is circumferentially sleeved outside the tread mounting cylinder 11. In this embodiment, the tread 2 is not directly mounted on the motor rotor 3. Instead, the tread 2 is assembled onto the wheel core 1 by providing the wheel core 1. Rapid disassembly and assembly with the hub motor is implemented by using the wheel core 1 when tire disassembly or assembly is desired, so that the disassembly and assembly process is simpler and more convenient, and damage to the motor rotor 3 is avoided

The wheel core 1 in the detachable tire according to this embodiment can be made of metal materials, such as aluminum alloy, stainless steel, or hard plastic materials. The tread 2 can be made of materials such as rubber or polyurethane.

Furthermore, since the tread 2 is not mounted in direct contact with the motor rotor 3, but is mounted onto the motor rotor 3 via the wheel core 1, a suitable assembly method for the tread 2 can be chosen according to the material used, which improves assembly efficiency and reduces manufacturing costs. For example, when the tread 2 is made of polyurethane material, the wheel core 1 can be made of aluminum alloy material, and the two can be directly manufactured as one piece by casting. When the tread 2 is made of rubber material, the wheel core 1 can be made of metal materials, such as aluminum alloy, stainless steel, or hard plastic materials, and the tread 2 can be mounted onto the tread mounting cylinder 11 of the wheel core 1 by interference press fit.

In an optional implementation, the wheel core 1 and the tread 2 are formed as one piece, for example, the wheel core 1 and the tread 2 are directly manufactured as one piece by integral casting according to the aforementioned method. In this way, the manufacturing costs are on the one hand reduced, and the stability of the wheel core 1 and the tread 2 is on the other hand ensured.

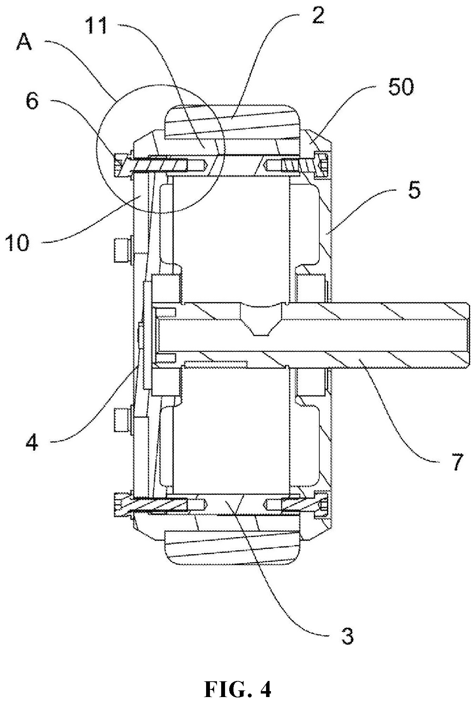

Further, as shown in FIG. 2, FIG. 4, and FIG. 5, this embodiment also includes an annular rim 110 circumferentially disposed on the tread mounting cylinder 11 on one side of the tread mounting cylinder 11 close to the side baffle plate 10. A surface of one side of the tread 2 facing the annular rim 110 abuts against the annular rim 110. In this way, when the tread 2 is mounted onto the tread mounting cylinder 11 by interference press fit, the inner side wall of the annular rim 110 can form a limit on the tread 2. The limit combined with the friction between the tread 2 and the tread mounting cylinder 11 ensures the stability of the two.

In one embodiment, the side baffle plate 10 is provided with a mounting hole 101. The detachable tire can be mounted onto the motor rotor 3 via the mounting hole 101 and a bolt 6.

In one embodiment, the side baffle plate 10 is provided with a threaded jacking hole 102. A thread is provided inside the threaded jacking hole 102. When it is desired to disassemble the detachable tire from the motor rotor 3, a bolt can be screwed into the threaded jacking hole 102. As the bolt is screwed in, the side baffle plate 10 is jacked away from the motor rotor 3, thereby achieving disassembly of the detachable tire.

FIG. 2, FIG. 3, and FIG. 4 show schematic diagrams of the hub motor mounted with the detachable tire according to the embodiment. The hub motor includes the motor body and the detachable tire according to the embodiment. The motor body is mounted in an inner chamber of the wheel core 1, and the motor body is detachably connected to the side baffle plate 10. Specifically, the motor body includes the motor rotor 3, as well as a first end cover 4 and a second end cover 5 disposed at both ends of the motor rotor 3. The side baffle plate 10 is detachably connected to the first end cover 4. The tread mounting cylinder 11 is circumferentially disposed outside the motor rotor 3.

To ensure stable contact between the detachable tire and the motor body, the side baffle plate 10 abuts against the first end cover 4, and/or the tread mounting cylinder 11 abuts against the second end cover 5. In one example, the side baffle plate 10 abuts against the first end cover 4, and the tread mounting cylinder 11 abuts against the second end cover 5. In another example, the side baffle plate 10 abuts against the first end cover 4, and there is a gap between the tread mounting cylinder 11 and the second end cover 5. In a further example, there is a gap between the side baffle plate 10 and the first end cover 4, and the tread mounting cylinder 11 abuts against the second end cover 5. To improve the stability of the abutment between the detachable tire and the motor body, the side baffle plate 10 with a larger contact area can be selected to abut against the first end cover 4, while a gap can exist between the tread mounting cylinder 11 and the second end cover 5 to improve the adaptability between the detachable tire and the motor body.

In one embodiment, the side baffle plate 10 is provided with the mounting hole 101. The first end cover 4 is provided with a threaded hole corresponding to the mounting hole 101. The bolt 6 can be used to connect the side baffle plate 10 to the first end cover 4. It is easy to understand that, in other optional implementations, connecting means such as pin fastening can also be used.

In one embodiment, the hub motor further includes a motor stator (not shown in the figures) and a fixed shaft 7. The motor stator is located between the motor rotor 3 and the fixed shaft 7. During operation, the motor rotor 3 rotates relative to the motor stator and the fixed shaft 7. The working principle of the hub motor falls into prior art and will not be repeated here.

To make the assembly operation simpler and more convenient, in this embodiment the side baffle plate 10 is provided with a positioning hole 100, and the first end cover 4 is provided with a positioning protrusion 40. The positioning hole 100 is adapted to the positioning protrusion 40. After assembly is completed, the positioning protrusion 40 protrudes into the positioning hole 100. In this way, a preliminary positioning is completed by aligning and inserting the positioning protrusion 40 with and into the positioning hole 100 during the assembly. Then, the side baffle plate 10 is screwed and fixed to the first end cover 4 with the bolt 6. It can be understood that, in an optional implementation, the first end cover 4 can be provided with the positioning hole, and correspondingly, the side baffle plate 10 can be provided with the positioning protrusion. In this case, the positioning hole provided on the first end cover is a blind hole.

To ensure good stability between the tire and the motor rotor 3 after assembly is completed, the structure of the second end cover 5 is also designed in this embodiment. Specifically, the second end cover 5 has an annular flange 50 protruding radially from the motor rotor 3. An end face of the tread mounting cylinder 11 facing the annular flange 50 abuts against the annular flange 50. In this way, during the process of assembling the tire onto the motor rotor 3, the end face of the tread mounting cylinder 11 facing the annular flange 50 abuts against the annular flange 50. The annular flange 50 can limit the tread mounting cylinder 11 on the wheel core 1 and can provide an indication that assembly is in place.

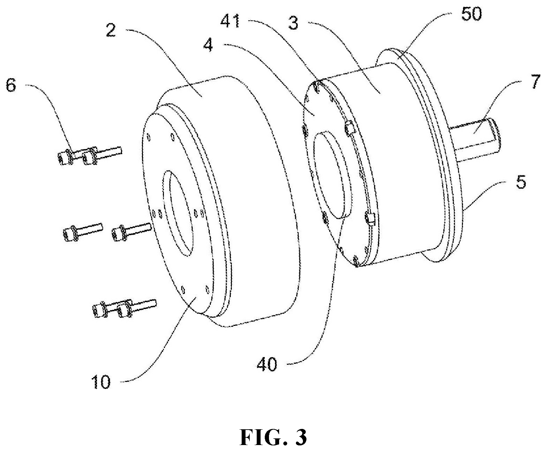

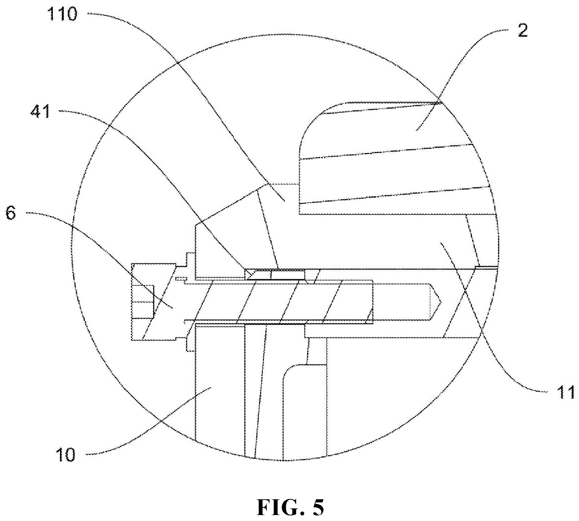

Additionally, for ease of disassembly and assembly, in this embodiment, a guide structure and the threaded jacking hole 102 are also provided. Specifically, as shown in FIG. 5, in this embodiment, a guide inclined surface 41 is provided on an end face of the first end cover 4 for ease of installation. In this way, during assembly, it is easy for the tread mounting cylinder 11 to be sleeved outside the first end cover 4 and the motor rotor 3. It is easy to understand that, in an optional implementation, the guide inclined surface can also be provided on the end face of the tread mounting cylinder. To facilitate disassembly, as shown in FIGS. 2 and 3, in this embodiment the side baffle plate 10 is provided with the threaded jacking hole 102 into which a bolt is to be screwed. A thread is provided inside the threaded jacking hole 102. In this way, during the disassembly process, if the tread mounting cylinder 11 and the motor rotor 3 are tightly fitted together and inconvenient to remove, the bolt can be used to jack the side baffle plate 10 away from the first end cover 4. For example, the bolt that connects the side baffle plate 10 to the first end cover 4 can be used to disassemble the tire, without additionally preparing a disassembly tool, and the operation is simple. Specifically, the thread size parameters of the threaded jacking hole 102 are designed to be compatible with the size parameters of the bolt used to connect the side baffle plate 10 to the first end cover 4. In this way, after the bolt is unscrewed, the bolt is screwed into the threaded jacking hole 102. As the bolt is screwed into the threaded jacking hole 102, the end of the bolt will apply pressure on the surface of one side of the first end cover 4 facing the side baffle plate 10. Thus, by simply screwing the bolt, the pressure can be applied to separate the side baffle plate 10 from the first end cover 4. It can be understood that the thread size parameters of the threaded jacking hole 102 and the size parameters of the bolt used to connect the side baffle plate 10 to the first end cover 4 can also be different. An additional compatible disassembly bolt can be prepared. Although the additional disassembly bolt needs to be prepared, since the bolt is common and easy to obtain, the difficulty of obtaining it is low, so that this disassembly method is still able to reduce operational difficulty.

The present application further provides a wheeled mobile robot, such as a cleaning robot, a transport robot, or a position guidance robot, etc. Such a wheeled mobile robot includes a body and the aforementioned hub motor. The hub motor is disposed on the body.

The above descriptions are only specific embodiments of the present application, but the protection scope of the present application is not limited thereto. Those skilled in the art should understand that the present application includes, but is not limited to, the content described in the accompanying drawings and the above specific embodiments. Any modifications that do not deviate from the functional and structural principles of the present application will fall into the scope of the claims.

## Claims

1. A detachable tire for a hub motor, wherein the detachable tire comprises a wheel core (1) and a tread (2), the wheel core (1) comprises a side baffle plate (10) for detachably connecting to a motor body of the hub motor, and the wheel core (1) comprises a tread mounting cylinder (11) disposed on one side of the side baffle plate (10), and the tread (2) is circumferentially sleeved outside the tread mounting cylinder (11).

2. The detachable tire for the hub motor according to claim 1, wherein an annular rim (110) is circumferentially disposed on the tread mounting cylinder (11) on one side of the tread mounting cylinder (11) close to the side baffle plate (10), and a surface of one side of the tread (2) facing the annular rim (110) abuts against the annular rim (110).

3. The detachable tire for the hub motor according to claim 1, wherein the side baffle plate (10) is provided with a threaded jacking hole (102) into which a bolt is to be screwed.

4. A hub motor comprising a motor body, wherein the hub motor further comprises the detachable tire for the hub motor according to any one of claims 1 to 3, the motor body is disposed in an inner chamber of the wheel core (1), and the motor body is detachably connected to the side baffle plate (10).

5. The hub motor according to claim 4, wherein the motor body comprises a motor rotor (3) as well as a first end cover (4) and a second end cover (5) disposed at both ends of the motor rotor (3), the side baffle plate (10) is detachably connected to the first end cover (4), and the tread mounting cylinder (11) is circumferentially disposed outside the motor rotor (3).

6. The hub motor according to claim 5, wherein one of the side baffle plate (10) and the first end cover (4) is provided with a positioning protrusion (40), and the other is provided with a positioning hole (100) adapted to the positioning protrusion (40), and the positioning protrusion (40) protrudes into the positioning hole (100).

7. The hub motor according to claim 5, wherein the second end cover (5) has an annular flange (50) protruding radially from the motor rotor (3), and an end face of the tread mounting cylinder (11) facing the annular flange (50) abuts against the annular flange (50).

8. The hub motor according to claim 5, wherein at least one of an end face of the tread mounting cylinder (11) and an end face of the first end cover (4) is provided with a guide inclined surface (41).

9. The hub motor according to claim 5, wherein the side baffle plate (10) is detachably connected to the first end cover (4) via a bolt (6).

10. A wheeled mobile robot comprising a body, wherein the wheeled mobile robot further comprises the hub motor according to any one of claims 4 to 9, and the hub motor is disposed on the body.
